# EUROPÄISCHE PATENTANMELDUNG

(11) **EP 3 675 301 A1**
(43) Veröffentlichungstag der Anmeldung: **01.07.2020**
(21) Anmeldenummer: 18248046.7
(22) Anmeldetag: 27.12.2018
(51) Int. Cl.: H02H 3/02, H02H 3/087, H02H 7/26, H02J 1/12

(54) **ELEKTRISCHES KOPPELN VON WENIGSTENS ZWEI AN EINEM ENERGIEVERSORGUNGSNETZ ANGESCHLOSSENEN ELEKTRISCHEN EINRICHTUNGEN MIT WENIGSTENS EINER AM ENERGIEVERSORGUNGSNETZ ANGESCHLOSSENEN ELEKTRISCHEN ENERGIEQUELLE**

(71) Anmelder: Siemens Aktiengesellschaft, 80333 München (DE)
(72) Erfinder: Schierling, Hubert, 91052 Erlangen (DE)

(57) **Zusammenfassung**

Die Erfindung betrifft ein Verfahren zum Koppeln von an einem Energieversorgungsnetz (10) angeschlossenen Einrichtungen (12 bis 24) mit einer Energiequelle (26) unter Nutzung einer vorgegebenen Versorgungsspannung (28), wobei
- die Energiequelle (26) an einem Energiequellenanschluss (32) angeschlossen wird,
- die elektrischen Einrichtungen (12 bis 24) an jeweiligen Einrichtungsanschlüssen (30) angeschlossen werden,
- die Einrichtungsanschlüsse (30) mittels Schutzeinrichtungen (34) vor einem bestimmungsfremden Überstrom geschützt werden, indem eine Sensoreinheit (50) einen jeweiligen Strom erfasst und mittels einer jeweiligen Schalteinheit (48) den jeweiligen Einrichtungsanschluss (30) abhängig von einem Ermitteln des Überstroms deaktiviert, und
- der Energiequellenanschluss (32) mit den Schutzeinrichtungen (34) mittels zweier elektrischer Leitungen (38, 40) gekoppelt wird,
dadurch gekennzeichnet, dass
an den elektrischen Leitungen (38, 40) eine Impulsschaltung (42) angeschlossen ist, mittels der bei einem Auftreten eines Spannungseinbruchs der Versorgungspannung (28) eine elektrische Ladungsmenge abgegeben wird, die zumindest abhängig vom Überstrom und einem vorgegebenen Zeitraum bestimmt ist.

## Beschreibung

Die Erfindung betrifft ein Energieversorgungsnetz zum elektrischen Koppeln von wenigstens zwei am Energieversorgungsnetz angeschlossenen elektrischen Einrichtungen mit wenigstens einer am Energieversorgungsnetz angeschlossenen elektrischen Energiequelle unter Nutzung einer vorgebbaren elektrischen Versorgungsspannung, mit einem Energiequellenanschluss zum Anschließen der wenigstens einen elektrischen Energiequelle, elektrischen Einrichtungsanschlüssen zum Anschließen einer jeweiligen der wenigstens zwei elektrischen Einrichtungen, mit den Einrichtungsanschlüssen elektrisch verbundene jeweilige Schutzeinrichtungen zum Schützen des jeweiligen der Einrichtungsanschlüsse vor einem bestimmungsfremden Überstrom, wobei jede Schutzeinrichtung eine Sensoreinheit zumindest zum Erfassen eines elektrischen Stroms am jeweiligen Einrichtungsanschluss und eine Schalteinheit aufweist, wobei die Schalteinheit ausgebildet ist, den jeweiligen Einrichtungsanschluss abhängig von einem Ermitteln des Überstroms zu deaktivieren, und wenigstens zwei mit der Versorgungsspannung beaufschlagten elektrischen Leitungen, von denen wenigstens eine Leitung den wenigstens einen Energiequellenanschluss mit den Schutzeinrichtungen elektrisch koppelt. Die Erfindung betrifft ferner auch ein Verfahren zum elektrischen Koppeln von wenigstens zwei an einem Energieversorgungsnetz angeschlossenen elektrischen Einrichtungen mit wenigstens einer am Energieversorgungsnetz angeschlossenen elektrischen Energiequelle unter Nutzung einer vorgegebenen elektrischen Versorgungsspannung, wobei die wenigstens eine elektrische Energiequelle an einem Energiequellenanschluss des Energieversorgungsnetzes angeschlossen wird, die wenigstens zwei elektrischen Einrichtungen an jeweiligen elektrischen Einrichtungsanschlüssen des Energieversorgungsnetzes angeschlossen werden, die Einrichtungsanschlüsse mittels jeweiliger mit den Einrichtungsanschlüssen elektrisch verbundener Schutzeinrichtungen vor einem bestimmungsfremden Überstrom geschützt werden, indem eine Sensoreinheit einer jeweiligen der Schutzeinrichtungen zumindest einen jeweiligen elektrischen Strom erfasst und der jeweilige Einrichtungsanschluss abhängig von einem Ermitteln des Überstroms mittels einer jeweiligen Schalteinheit deaktiviert wird, und der wenigstens eine Energiequellenanschlusses mit den Schutzeinrichtungen mittels wenigstens einer von wenigstens zwei mit der Versorgungsspannung beaufschlagten elektrischen Leitungen elektrisch gekoppelt wird.

Gattungsgemäße Energieversorgungsnetze sowie Verfahren der gattungsgemäßen Art sind im Stand der Technik umfänglich bekannt, sodass es eines gesonderten druckschriftlichen Nachweises hierfür nicht bedarf. Energieversorgungsnetze sowie gattungsgemäße Verfahren dienen dazu, zwischen elektrischen Energiequellen und elektrischen Einrichtungen, insbesondere elektrischen Verbrauchern, elektrische Energie austauschen zu können, sodass ein bestimmungsgemäßer Betrieb der an das Energieversorgungsnetz angeschlossenen elektrischen Einrichtungen und Energiequellen erreicht werden kann. Dabei braucht eine elektrische Energiequelle nicht in jedem Betriebszustand als Energiequelle betrieben zu sein, sondern sie kann abhängig von einem jeweiligen Betriebszustand der Energiequelle auch als elektrischer Verbraucher beziehungsweise als elektrische Einrichtung betrieben sein. Im Übrigen gilt dies umgekehrt natürlich auch für die elektrischen Einrichtungen, die ihrerseits nicht zwingend in jedem Betriebszustand als elektrischer Verbraucher betrieben zu werden brauchen, sondern, abhängig vom jeweiligen Betriebszustand der elektrischen Einrichtung, auch als Energiequelle dienen können. In der Regel ist es jedoch vorgesehen, dass die Energiequelle überwiegend elektrische Energie über das Energieversorgungsnetz bereitstellt und die elektrischen Einrichtungen überwiegend elektrische Energie aus dem Energieversorgungsnetz beziehen, um ihren bestimmungsgemäßen Betrieb realisieren zu können.

Energieversorgungsnetze sowie auch Verfahren zu deren Betrieb sind im Stand der Technik umfänglich im Gebrauch. In der Regel ist es vorgesehen, dass zumindest für jede an das Energieversorgungsnetz angeschlossene elektrische Einrichtung eine Schutzeinrichtung vorgesehen ist, die dazu dient, vor einem auftretenden Überstrom zu schützen. Zu diesem Zweck wird ein elektrischer Strom an einem jeweiligen der Energiequellenanschlüsse mittels eines Stromsensors erfasst und ausgewertet. Das Auswerten umfasst insbesondere einen Vergleich des erfassten Werts des elektrischen Stroms mit einem vorgegebenen Vergleichswert. Ergibt sich aus dem Vergleich, dass der Wert des erfassten Stroms größer als der Vergleichswert ist, wird dies als Überstrom ermittelt und es wird ein entsprechendes Steuersignal an die Schalteinheit abgegeben, mittels der der entsprechende elektrische Einrichtungsanschluss abhängig von dem Steuersignal deaktiviert werden kann. Dem Grunde nach kann dieses Schutzprinzip natürlich auch für die wenigstens eine elektrische Energiequelle vorgesehen sein.

Im Stand der Technik ist es üblich, dass ein elektrisches Netz, welches der Verteilung von elektrischer Energie dient, eine jeweilige spezifische Topologie aufweisen kann, insbesondere unterschiedliche Energieverteilungsebenen beziehungsweise Versorgungsebenen, durch die zum Beispiel eine Art Baumstruktur gebildet werden kann.

Besonders wenn elektrische Einrichtungen mit voneinander abweichenden elektrischen Leistungen am Energieversorgungsnetz angeschlossen sind, kann das Problem auftreten, dass bei einem Überstrom, insbesondere einem Kurzschlussstrom in einem Kurzschlussfall, bei einer jeweiligen der elektrischen Einrichtungen nicht die Schutzeinrichtung zuerst die elektrische Einrichtung deaktiviert beziehungsweise auslöst, an der die elektrische Einrichtung angeschlossen ist, bei der der Überstrom beziehungsweise der Kurzschlussstrom auftritt, sondern zum Beispiel eine benachbart angeordnete Schutzeinrichtung, eine übergeordnete Schutzeinrichtung einer übergeordneten Versorgungsebene oder dergleichen. Dies ist jedoch unerwünscht, weil dadurch der bestimmungsgemäße Betrieb der weiteren elektrischen Einrichtungen, die an dem Energieversorgungsnetz angeschlossen sind, gestört werden kann. Das Prinzip, dass die Schutzeinrichtung zuerst auslöst, bei der der Überstrom auftritt, wird auch Selektivität genannt.

Bei einem Auftreten eines Fehlers, insbesondere eines Kurzschlusses in einem ausgedehnten Gleichspannungsversorgungsnetz als Energieversorgungsnetz, ist es erwünscht, dass die Selektivität zuverlässig gewährleistet ist. Das heißt, es soll immer genau der Einrichtungsanschluss mittels der Schutzeinrichtung abgeschaltet werden, bei der der Fehler, beispielsweise der Überstrom oder Kurzschlussstrom, aufgetreten ist.

Viele elektrische Einrichtungen, insbesondere im Bereich der Gleichspannungsanwendung, stellen einrichtungsanschlussseitig eine nicht unbeachtliche elektrische Kapazität bereit. Dies kann zum Beispiel durch einen Kondensator oder dergleichen erfolgen. Sind nun derartige elektrische Einrichtungen von unterschiedlicher Leistung am Gleichspannungsversorgungsnetz angeschlossen, kann bei einem Auftreten eines Fehlers, beispielsweise eines Kurzschlusses, bei derjenigen der elektrischen Einrichtungen, die eine große elektrische Leistung aufweist, ein entsprechender Kurzschlussstrom die Folge sein.

In der Regel benötigt die Schutzeinrichtung einen gewissen Zeitraum, um den Fehler beziehungsweise den Kurzschluss zuverlässig zu ermitteln und den entsprechenden Einrichtungsanschluss mittels deren Schalteinheit zu deaktivieren. Bis zum Abschalten der entsprechenden elektrischen Einrichtung mittels der Schutzeinrichtung fließt jedoch ein entsprechend großer Strom aus dem Energieversorgungsnetz in die von dem Fehler betroffene elektrische Einrichtung. Dieser Strom kann aufgrund von Leitungsinduktivitäten und dergleichen insbesondere von benachbart angeordneten elektrischen Einrichtungen bezogen werden, beispielsweise wenn sie anschlussseitig eine entsprechende Kapazität bereitstellen. Ist eine solche elektrische Einrichtung für eine kleine elektrische Leistung ausgelegt, kann der Fall eintreten, dass die Kapazität dieser elektrischen Einrichtung einen entsprechenden Strom liefert, der über die Schutzeinrichtung, an der diese elektrische Einrichtung angeschlossen ist, zu der Schutzeinrichtung geliefert wird, an der der Fehler beziehungsweise der Kurzschluss aufgetreten ist. In einem solchen Fall kann das Prinzip der Selektivität nicht mehr gewährleistet werden und diese elektrische Einrichtung wird mittels der zugeordneten Schutzeinrichtung abgeschaltet, obwohl kein Fehler vorliegt, weil beispielsweise der Vergleichswert dieser entsprechenden Schutzeinrichtung kleiner ist, als der Vergleichswert der Schutzeinrichtung, bei der der Fehler beziehungsweise der Kurzschluss aufgetreten ist.

Bei Energieversorgungsnetzen, die mit einer Wechselspannung als Versorgungsspannung beaufschlagt sind, ist es beispielsweise bekannt, die Schutzeinrichtungen über Kommunikationsleitungen entsprechend miteinander kommunikationstechnisch zu koppeln. Dadurch kann durch entsprechende Kommunikation zwischen den Schutzeinrichtungen untereinander erreicht werden, dass das Prinzip der Selektivität realisiert werden kann. Dies ist jedoch vergleichsweise aufwändig und insbesondere für den Einsatz bei Gleichspannung als Versorgungsspannung wenig geeignet, weil der Kurzschluss sehr schnell abgeschaltet werden muss, um die Selektivität zu gewährleisten und die Anforderung an die Reaktionsgeschwindigkeit der Kommunikation sehr hoch wären.

Der Erfindung liegt deshalb die Aufgabe zugrunde, die Selektivität bei einem Energieversorgungsnetz, insbesondere wenn es mit einer Gleichspannung als Versorgungsspannung beaufschlagt ist, zu verbessern.

Als Lösung werden mit der Erfindung ein Energieversorgungsnetz sowie ein Verfahren gemäß den unabhängigen Ansprüchen vorgeschlagen.

Vorteilhafte Weiterbildungen ergeben sich anhand der Merkmale der abhängigen Ansprüche.

Bezüglich eines gattungsgemäßen Energieversorgungsnetzes wird insbesondere vorgeschlagen, dass die wenigstens zwei elektrischen Leitungen mit einer Impulsschaltung zum Abgeben einer vorgebbaren elektrischen Ladungsmenge mit wenigstens einem Kondensator elektrisch gekoppelt ist, die ausgebildet ist, bei einem Auftreten eines Spannungseinbruchs der Versorgungspannung die elektrische Ladungsmenge abzugeben, wobei die Ladungsmenge zumindest abhängig vom Überstrom und einem vorgebbaren Zeitraum zum Abgeben der Ladungsmenge bestimmt ist.

Bezüglich eines gattungsgemäßen Verfahrens wird insbesondere vorgeschlagen, dass an den wenigstens zwei elektrischen Leitungen eine Impulsschaltung zum Abgeben einer vorgegebenen elektrischen Ladungsmenge mit wenigstens einem Kondensator angeschlossen ist, wobei mittels der Impulsschaltung bei einem Auftreten eines Spannungseinbruchs der Versorgungspannung die elektrische Ladungsmenge abgegeben wird, wobei die Ladungsmenge zumindest abhängig vom Überstrom und einem vorgegebenen Zeitraum zum Abgeben der Ladungsmenge bestimmt ist.

Die Erfindung basiert auf dem Gedanken, dass durch die Impulsschaltung erreicht werden kann, dass energieversorgungsnetzseitig für den vorgegebenen Zeitraum beziehungsweise den vorgebbaren Zeitraum eine vorgegebene elektrische Ladungsmenge in das Energieversorgungsnetz eingespeist werden kann, die insbesondere abhängig vom Überstrom und vorzugsweise für den vorgegebenen Zeitraum bereitgestellt wird. Dadurch kann nämlich erreicht werden, dass im Fehlerfall beziehungsweise im Fall eines Kurzschlusses bei einer der elektrischen Einrichtungen der Überstrom zumindest nicht vollständig von einer oder mehreren der weiteren elektrischen Einrichtungen bereitgestellt zu werden braucht, sodass die zuverlässige Deaktivierung des betroffenen Einrichtungsanschlusses, an dem der Fehler beziehungsweise der Kurzschluss aufgetreten ist, gewährleistet werden kann, ohne dass die weiteren elektrischen Einrichtungen oder die die wenigstens eine elektrische Energiequelle betroffen zu sein brauchen. Hierdurch können insbesondere die Selektivität verbessert und die Betriebsbereitschaft der weiteren elektrischen Einrichtungen ebenfalls zuverlässiger gewährleistet werden.

Die Erfindung ermöglicht es also, mit einem vergleichsweise geringen Aufwand die Selektivität deutlich zu verbessern. Die im Stand der Technik auftretende Problematik, dass nicht betroffene elektrische Einrichtungen in unerwünschter Weise deaktiviert werden, kann somit besonders aber nicht nur bei Energieversorgungsnetzen, die mit einer Gleichspannung betrieben werden, deutlich reduziert werden.

Der Energiequellenanschluss ist vorzugsweise entsprechend der anzuschließenden Energiequelle ausgebildet, beispielsweise bezüglich des elektromechanischen Anschlusses, Anzahl von Anschlusspolen und/oder dergleichen. Der Energiequellenanschluss kann somit wenigstens zwei elektrische Anschlusspole aufweisen, an die eine entsprechend zweipolig ausgebildete Energiequelle angeschlossen werden kann. Der Energiequellenanschluss kann darüber hinaus auch mit einer jeweiligen Schutzeinrichtung verbunden sein, die dem Grunde nach entsprechend der Schutzeinrichtungen ausgebildet sein kann, welche mit den entsprechenden jeweiligen Einrichtungsanschlüssen elektrisch verbunden sind. Bei mehreren elektrischen Energiequellen kann darüber hinaus vorgesehen sein, dass nicht sämtliche der Energiequellenanschlüsse mit einer entsprechenden Schutzeinrichtung verbunden zu sein brauchen. Dies kann von individuellen Eigenschaften des Energieversorgungsnetzes in Verbindung mit den jeweiligen angeschlossenen Energiequellen abhängig sein. Die elektrischen Energiequellenanschlüsse sind daher derart ausgebildet, dass sie wenigstens zwei Anschlusspole aufweisen, damit eine entsprechend ausgebildete elektrische Einrichtung daran angeschlossen werden kann.

Das Energieversorgungsnetz weist darüber hinaus die wenigstens zwei elektrischen Leitungen auf, mittels denen die Schutzeinrichtungen mit dem wenigstens einen Energiequellenanschluss elektrisch gekoppelt sind. Eine der elektrischen Leitungen kann auch durch ein elektrisches Bezugspotential wie eine Anlagenmasse oder dergleichen gebildet sein. Darüber hinaus kann natürlich auch vorgesehen sein, dass eine der Leitungen lediglich durch die Schutzeinrichtung durchgeschleift ist. Diese Leitung kann auch an der Schutzeinrichtung vorbei unmittelbar am Einrichtungsanschluss angeschlossen sein. Auch Kombinationen hiervon können vorgesehen sein.

Die Anzahl der elektrischen Leitungen kann insbesondere davon abhängig sein, welche Versorgungsspannung zum Verteilen der elektrischen Energie genutzt wird. Bei zwei elektrischen Leitungen kann die Versorgungsspannung somit eine Gleichspannung oder auch eine einphasige Wechselspannung sein. Darüber hinaus ist es natürlich möglich, dass, wenn eine mehrphasige Wechselspannung als Versorgungsspannung genutzt wird, elektrische Leitungen zum Verteilen der Energie entsprechend der Anzahl der Phasen vorgesehen sind. Eine derartige Ausgestaltung kann zum Beispiel eine dreiphasige elektrische Versorgungsspannung nutzen, die dann wenigstens drei elektrische Leitungen, und zwar für jede Phase wenigstens eine elektrische Leitung, nutzt. Darüber hinaus kann bei einer dreiphasigen Wechselspannung als Versorgungsspannung ergänzend vorgesehen sein, dass eine vierte Leitung vorgesehen ist, die mit einem Nullpotential beaufschlagt ist. Die Erfindung ist jedoch nicht auf die Anwendung der vorgenannten Spannungen begrenzt.

Für wenigstens jeden der Einrichtungsanschlüsse, an die die elektrischen Einrichtungen anschließbar sind, ist darüber hinaus eine jeweilige Schutzeinrichtung vorgesehen, die dazu dient, den jeweiligen der Einrichtungsanschlüsse vor einem bestimmungsfremden Überstrom zu schützen. Zu diesem Zweck umfasst die Schutzeinrichtung eine Sensoreinheit, mittels der zumindest ein elektrischer Strom am jeweiligen Einrichtungsanschluss erfasst werden kann. Diesbezüglich kann die Sensoreinheit einen Stromsensor umfassen, beispielsweise eine Hall-Sonde, eine Rogowski-Spule, einen Shunt und/oder dergleichen. Die Sensoreinheit ist vorzugsweise dazu ausgebildet, eine Vergleichsfunktionalität bereitzustellen, bei der ein elektrischer Wert des elektrischen Stroms, der mittels der Sensoreinheit erfasst worden ist, mit einem Vergleichswert verglichen werden kann. Für den Vergleich kann vorgesehen sein, dass zuvor ein Betrag des Werts des elektrischen Stroms, ein Effektivwert oder dergleichen ermittelt wird, um den Vergleich durchführen zu können. Abhängig von dem Vergleich stellt die Sensoreinheit sodann ein Steuersignal bereit.

Die Schutzeinrichtung umfasst ferner die Schalteinheit, die ausgebildet ist, den jeweiligen Einrichtungsanschluss abhängig vom Erfassen des Überstroms zu deaktivieren. Zu diesem Zweck ist die Schalteinheit kommunikationstechnisch mit der Sensoreinheit verbunden, und kann vorzugsweise mittels des Steuersignals der Sensoreinheit in gewünschter Weise gesteuert werden. Wird mittels der Sensoreinheit ein Überstrom ermittelt beziehungsweise festgestellt, zum Beispiel wenn eine Betrag des Werts des erfassten elektrischen Stroms größer als der Vergleichswert ist, kann die Schalteinheit mittels des Steuersignals derart gesteuert werden, dass der Einrichtungsanschluss entsprechend deaktiviert wird. Zu diesem Zweck kann die Schalteinheit elektromechanische Schaltelemente aufweisen, beispielsweise nach Art eines Relais, eines Schützes oder dergleichen, um die gewünschte Schaltfunktionalität bereitstellen zu können. Darüber hinaus kann die Schalteinheit insbesondere auch wenigstens ein Halbleiterschaltelement aufweisen, mittels dem die gewünschte Schaltfunktion zumindest teilweise realisiert werden kann. Die Schalteinheit ist jedoch in der Regel nicht dazu ausgebildet, eine Strombegrenzungsfunktion zu realisieren, um unerwünschte Wirkungen auf die angeschlossene elektrische Einrichtung weitgehend vermeiden zu können.

Ein Halbleiterschaltelement beziehungsweise Schaltelement im Sinne dieser Offenbarung ist dabei vorzugsweise ein steuerbares elektronisches Schaltelement, beispielsweise ein steuerbarer elektronischer Halbleiterschalter wie ein Transistor, der in einem Schaltbetrieb betrieben wird, ein Thyristor, Kombinationsschaltungen hiervon, vorzugsweise mit parallelgeschalteten Inversdioden, ein Gate-Turn-Off-Thyristor (GTO), ein Insulated-Gate-Bipolar-Transistor (IGBT), Kombinationen hiervon oder dergleichen. Dem Grunde nach kann das Schaltelement jedoch auch durch einen Feldeffekttransistor, insbesondere eine Metaloxide-Semiconductor-Field-Effect-Transistor (MOSFET) gebildet sein.

Zur Realisierung der gewünschten Schaltfunktion durch einen Transistor wird dieser im Schaltbetrieb betrieben. In Bezug auf einen Halbleiterschalter unter Nutzung eines Transistors bedeutet der Schaltbetrieb, dass in einem eingeschalteten Schaltzustand zwischen den eine Schaltstrecke bildenden Anschlüssen des Transistors ein sehr kleiner elektrischer Widerstand bereitgestellt wird, sodass ein hoher Stromfluss bei sehr kleiner Restspannung möglich ist. In einem ausgeschalteten Schaltzustand ist hingegen die Schaltstrecke des Transistors hochohmig, das heißt, sie stellt einen hohen elektrischen Widerstand bereit, sodass auch bei hoher, an der Schaltstrecke anliegender elektrischer Spannung im Wesentlichen kein oder nur ein sehr geringer, insbesondere vernachlässigbarer, Stromfluss vorliegt. Hiervon unterscheidet sich ein Linearbetrieb bei Transistoren, der aber beim Schaltbetrieb in der Regel nicht zum Einsatz kommt.

Die Schaltelemente weisen zur Realisierung der Steuerfunktionalität jeweils wenigstens einen Steueranschluss auf, an dem sie mit dem Steuersignal beaufschlagbar sind, sodass die gewünschte Schaltfunktion des Schaltelements realisiert werden kann. Das Steuersignal kann ein binäres Schaltsignal sein, welches zwei Zustandswerte einnehmen kann, um die gewünschten Schaltfunktionen des Schaltelements bereitstellen zu können. Beispielsweise kann das Schaltsignal durch eine Impulsfolge gebildet sein, mittels der der Steueranschluss beaufschlagt wird. Dies ist vor allem bei Thyristoren und GTO zweckmäßig. Darüber hinaus kann bei Transistoren vorgesehen sein, dass das Schaltsignal ein Rechtecksignal ist, wobei ein jeweiliger Schaltzustand des Schaltelements einem der Potentiale des Rechtecksignals zugeordnet werden kann. Ein solches Signal ist beispielsweise für Transistoren, insbesondere für bipolare Transistoren, Feldeffekttransistoren oder dergleichen zweckmäßig.

Erfindungsgemäß ist die Impulsschaltung zum Abgeben der vorgebbaren elektrischen Ladungsmenge an die wenigstens zwei elektrischen Leitungen angeschlossen. Die Impulsschaltung dient dazu, die vorgebbare elektrische Ladungsmenge insbesondere dann abzugeben, wenn ein Spannungseinbruch der Versorgungsspannung auftritt. In der Regel tritt ein derartiger Spannungseinbruch dann auf, wenn ein Fehler bei einer der angeschlossenen elektrischen Einrichtungen, insbesondere ein Kurzschluss, vorliegt, der dazu führt, dass ein besonders hoher Strombedarf am jeweiligen Einrichtungsanschluss erzeugt wird. Dieser Strombedarf, auch Überstrom genannt, ist außerhalb des bestimmungsgemäßen Betriebs der elektrischen Einrichtung und des Energieversorgungsnetzes, und stellt somit einen bestimmungsfremden Überstrom dar. Da die elektrischen Leitungen in der Regel zumindest induktive Eigenschaften breitstellen, kann dies besonders bei einem räumlich verteilten Energieversorgungsnetz dazu führen, dass sich ein Spannungseinbruch aufgrund des bestimmungsfremden Überstroms besonders stark bei räumlich unmittelbar benachbart angeschlossenen elektrischen Einrichtungen auswirken kann. Durch die Impulsschaltung kann nun erreicht werden, dass eine vorgebbare beziehungsweise vorgegebene elektrische Ladungsmenge abgegeben wird, sodass diese Auswirkungen des bestimmungsfremden Überstroms insbesondere auf die räumlich unmittelbar benachbart angeordneten elektrischen Einrichtungen reduziert beziehungsweise begrenzt werden können. Dadurch kann erreicht werden, dass ein unerwünschtes Deaktivieren von elektrischen Einrichtungen, bei denen kein Fehler vorliegt, besser vermieden werden kann. Durch die Impulsschaltung kann also die Selektivität deutlich verbessert werden.

Um die Ladungsmenge bereitstellen zu können, weist die Impulsschaltung wenigstens einen Kondensator auf. Natürlich kann die Impulsschaltung auch mehrere Kondensatoren aufweisen, die darüber hinaus an unterschiedlichen Stellen der elektrischen Leitungen angeschlossen sind. Die Impulsschaltung kann in diesem Fall zum Beispiel also über das Energieversorgungsnetz verteilt ausgebildet sein. Die Impulsschaltung braucht somit nicht lediglich einen einzigen Kondensator aufzuweisen. Darüber hinaus ermöglicht es diese Ausgestaltung, dass die einzelnen Kondensatoren hinsichtlich des Werts ihrer Kapazität kleiner ausgelegt sein können.

Für das Auslegen der Kapazität des wenigstens einen Kondensator kann in Betracht gezogen werden, dass die wenigstens zwei elektrischen Leitungen im Falle des bestimmungsfremden Überstroms eine vorgegebene Leitungsinduktivität bereitstellen, die mittels der Impulsschaltung zumindest teilweise kompensiert werden kann. Darüber hinaus kann der Wert der Kapazität des wenigstens einen Kondensator zumindest teilweise auch davon abhängig gewählt werden, wie groß der bestimmungsfremde Überstrom sein kann und für welchen vorgegebenen Zeitraum die Funktion der Impulsschaltung benötigt wird. Hieraus kann sich die vorgegebene beziehungsweise vorgebbare Ladungsmenge ermitteln lassen, die dann unter Berücksichtigung der Versorgungsspannung zum Ermitteln des Werts der Kapazität des wenigstens einen Kondensator genutzt werden kann. Natürlich können hier ergänzend auch empirische Untersuchungen berücksichtigt werden, um spezifische Eigenschaften des Energieversorgungsnetzes besser berücksichtigen zu können.

Die Impulsschaltung stellt die elektrische Ladungsmenge, vorzugsweise automatisiert, bei Auftreten eines Spannungseinbruchs der Versorgungsspannung bereit. Es ist also dem Grunde nach kein weiterer Aufwand erforderlich, um die elektrische Ladungsmenge in gewünschter Weise abzugeben beziehungsweise bereitzustellen.

Die Erfindung ist somit grundsätzlich für Energieversorgungsnetze geeignet, deren Versorgungsspannung eine Gleichspannung oder auch eine Wechselspannung ist.

Der vorgebbare beziehungsweise vorgegebene Zeitraum kann unter anderem vorzugsweise abhängig davon bestimmt werden, wie die Schutzeinrichtung auf den bestimmungsfremden Überstrom jeweils reagiert, beispielsweise welche Auslösecharakteristik sie für das Deaktivieren bei einem bestimmungsfremden Überstrom nutzt. Dies braucht nicht für sämtliche der Schutzeinrichtungen gleich zu sein. Für die Ermittlung des Zeitraums kann deshalb zum Beispiel die ungünstigste Auslösecharakteristik herangezogen werden. Bei einer über die räumliche Erstreckung des Energieversorgungsnetzes angeordneten Impulsschaltung kann darüber hinaus vorgesehen sein, dass der Zeitraum abhängig von einer jeweiligen Position im Energieversorgungsnetz bestimmt wird. Zu diesem Zweck können spezifische Eigenschaften des Energieversorgungsnetzes sowie auch der daran angeschlossenen elektrischen Einrichtungen und/oder elektrischen Energiequellen berücksichtigt werden.

Vorzugsweise ist der Zeitraum abhängig von wenigstens einer charakteristischen Eigenschaft wenigstens einer der Schutzeinrichtungen bestimmt. Die charakteristische Eigenschaft kann zum Beispiel ein Auslösestrom, die Auslösecharakteristik und/oder dergleichen sein. Der Auslösestrom kann zum Beispiel abhängig vom Vergleichswert bestimmt sein. Darüber hinaus können Leitungsinduktivitäten in Betracht gezogen werden, um den Zeitraum zu bestimmen. Insgesamt kann hierdurch das Energieversorgungsnetz weiter verbessert werden.

Ferner wird vorgeschlagen, dass bei Schutzeinrichtungen, die für unterschiedlich große bestimmungsfremde Überströme ausgebildet sind, die Ladungsmenge zumindest abhängig vom größten der Überströme bestimmt ist. Dadurch kann sichergestellt werden, dass auch bei einer Schutzeinrichtung, die einen besonders großen bestimmungsfremden Überstrom zulässt, die Selektivität gewährleistet werden kann.

Weiterhin wird vorgeschlagen, dass zum wenigstens einen Kondensator ein Schaltelement in Reihe geschaltet ist. Dadurch kann erreicht werden, dass die Ladungsmenge zwar in erfindungsgemäßer Weise bereitgestellt werden kann, zugleich jedoch die Auswirkung des wenigstens einen Kondensator und infolgedessen auch der Impulsschaltung auf das Energieversorgungsnetz insgesamt reduziert werden kann.

Vorzugsweise umfasst das Schaltelement eine Diode. Diese Ausgestaltung eignet sich besonders für Energieversorgungsnetze, deren Versorgungsspannung eine Gleichspannung ist. Dadurch kann ein bestimmungsgemäßes Abgeben der Ladungsmenge erreicht werden, ohne dass ein zusätzlicher Steuerungsaufwand erforderlich ist. Zugleich kann während des bestimmungsgemäßen Betriebs, das heißt, wenn kein bestimmungsfremder Überstrom auftritt, die Einwirkung des Kondensators beziehungsweise der Impulsschaltung reduziert werden. Die Diode ist hinsichtlich ihrer Spannungsfestigkeit sowie auch ihres Grenzlastintegrals entsprechend angepasst auszuwählen. Handelt es sich bei der Impulsschaltung um eine Impulsschaltung mit mehreren Kondensatoren, kann vorgesehen sein, dass jeder der Kondensatoren mittels einer eigenen Diode an die Leitungen angeschlossen ist.

Alternativ oder ergänzend kann auch vorgesehen sein, dass das Schaltelement mittels eines Steuersignals steuerbar ausgebildet ist. Bei dieser Ausgestaltung kann ein Spannungssensor vorgesehen sein, mittels dessen der Spannungseinbruch erfasst werden kann. Abhängig von der Erfassung des Spannungseinbruchs wird das Schaltelement in den eingeschalteten Schaltzustand geschaltet, sodass die Impulsschaltung die gewünschte Ladungsmenge bereitstellen kann. Natürlich kann diese Ausgestaltung auch mit Dioden als Schaltelementen kombiniert sein, insbesondere bei einer über das Energieversorgungsnetz verteilt ausgebildeten Impulsschaltung. Das Schaltelement kann vorzugsweise ein Halbleiterschaltelement wie ein Transistor, ein Thyristor oder dergleichen sein.

Insbesondere kann vorgesehen sein, dass das Energieversorgungsnetz eine mit den Sensoreinheiten signaltechnisch gekoppelte Steuereinheit zum Bereitstellen eines Steuersignals für das Schaltelement der Impulsschaltung aufweist. Dadurch ist es möglich, vorzugsweise unabhängig von der Funktion der Schutzeinrichtungen, die jeweiligen elektrischen Ströme zu erfassen und auszuwerten und hieraus das Steuersignal für das Schaltelement der Impulsschaltung zu erzeugen. Hierdurch kann die Funktionalität weiter verbessert werden. Insbesondere eignet sich die Ausgestaltung mittels des steuerbaren Schaltelements für eine Anwendung bei einer Versorgungsspannung, die als Wechselspannung vorgesehen ist.

Vorzugsweise ist das Energieversorgungsnetz als ein Gleichspannungsenergieversorgungsnetz ausgebildet. Gerade bei Gleichspannungsenergieversorgungsnetzen eignet sich die Erfindung besonders, weil sie mit geringem Aufwand bei einer zuverlässigen Funktionalität eine deutliche Verbesserung in Bezug auf die Selektivität ermöglicht.

Eine Weiterbildung sieht vor, dass die Impulsschaltung zumindest teilweise einstückig mit wenigstens einer der Schutzeinrichtungen ausgebildet ist. Beispielsweise kann vorgesehen sein, dass der wenigstens eine Kondensator in eine der Schutzeinrichtungen derart integriert ist, dass die abgegebene beziehungsweise abgebbare Ladungsmenge bei einem bestimmungsfremden Überstrom somit unmittelbar im Bereich der Schutzeinrichtung zur Verfügung gestellt werden kann. Dadurch können die Auswirkungen auf das Energieversorgungsnetz sowie die weiteren elektrischen Einrichtungen besonders günstig reduziert werden. Zugleich ermöglicht es diese Ausgestaltung, die Impulsschaltung auf einfache Weise in das Energieversorgungsnetz zu integrieren und zugleich mit der Bereitstellung des Energieversorgungsnetzes eine entsprechende Funktionalität automatisch bereitzustellen. Es ist bei dieser Ausgestaltung nicht mehr erforderlich, eine separate Impulsschaltung vorzusehen. Natürlich kann ergänzend jedoch auch eine separate Impulsschaltung vorgesehen sein. Die Impulsschaltung kann natürlich auch in mehrere der Schutzeinrichtungen integriert ausgebildet sein. Weiterhin kann jede der Schutzeinrichtungen eine eigene Impulsschaltung umfassen. Diese kann individuell an die jeweilige Schutzeinrichtung angepasst ausgebildet sein.

Die für das erfindungsgemäße Energieversorgungsnetz angegebenen Vorteile und Wirkungen gelten natürlich gleichermaßen für das erfindungsgemäße Verfahren und umgekehrt. Infolgedessen können Vorrichtungsmerkmale natürlich auch als Verfahrensmerkmale und umgekehrt formuliert sein.

Weitere Vorteile und Merkmale ergeben sich aus der folgenden Beschreibung von Ausführungsbeispielen anhand der Figuren. In den Figuren bezeichnen gleiche Bezugszeichen gleiche Merkmale und Funktionen.

Es zeigen:
- FIG 1: in einer schematischen Blockschaltbilddarstellung ein Gleichspannungsenergieversorgungsnetz mit zwei Versorgungsebenen, an das als Energiequelle ein öffentliches Energieversorgungsnetz angeschlossen ist und an das eine Reihe von elektrischen Einrichtungen als Verbraucher angeschlossen ist;
- FIG 2: eine schematische Schaltbilddarstellung einer Schutzeinrichtung für das Energieversorgungsnetz gemäß FIG 1;
- FIG 3: eine schematische Blockschaltbilddarstellung wie FIG 1, bei der mittels Energieflusspfeilen ein Stromfluss bei einem Kurzschluss an einem der angeschlossenen elektrischen Einrichtungen dargestellt ist;
- FIG 4: eine schematische Schaltbilddarstellung wie FIG 1, bei der ergänzend eine Impulsschaltung angeschlossen ist;
- FIG 5: eine schematische Schaltbilddarstellung einer Schutzeinrichtung mit einer integrierten Impulsschaltung; und
- FIG 6: eine schematische Schaltbilddarstellung der Schutzeinrichtung mit einer integrierten Impulsschaltung auf Basis von FIG 5.

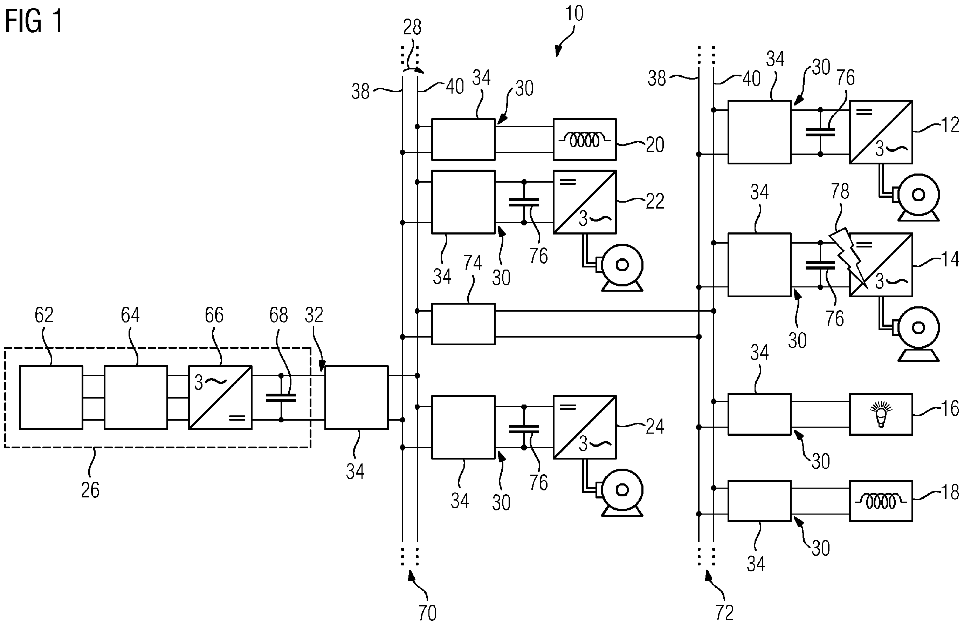

FIG 1 zeigt in einer schematischen Blockschaltbilddarstellung ein Gleichspannungsenergieversorgungsnetz 10, mittels dessen am Energieversorgungsnetz angeschlossene elektrische Einrichtungen 12 bis 24 mit einer am Gleichspannungsenergieversorgungsnetz 10 angeschlossenen elektrischen Energiequelle 26 elektrisch gekoppelt werden. Die Energiequelle 26 ist vorliegend durch ein öffentliches Energieversorgungsnetz 62 gebildet, welches eine dreiphasige Wechselspannung von vorliegend etwa 400 V bereitstellt. Ferner ist die dreiphasige Wechselspannung über eine Schutzeinrichtung 64 bereitgestellt, die ihrerseits an einen Gleichrichter 66 angeschlossen ist, der die dreiphasige Wechselspannung in vorgegebener Weise gleichrichtet und an einem Kondensator 68 eine entsprechende Gleichspannung 28 als Versorgungsspannung bereitstellt. Die Energiequelle 26 ist an einem Energiequellenanschluss 32 des Gleichspannungsenergieversorgungsnetzes 10 angeschlossen.

Das Gleichspannungsenergieversorgungsnetz 10 weist eine erste Versorgungsebene 70 sowie eine zweite Versorgungsebene 72 auf, die über eine Schutzeinrichtung 74 miteinander elektrische gekoppelt sind. An die erste Versorgungsebene 70 ist auch eine Schutzeinrichtung 34 angeschlossen, die den Energiequellenanschluss 32 bereitstellt, an die die Energiequelle 26 angeschlossen ist.

Die Versorgungsebenen 70, 72 umfassen jeweils zwei elektrische Leitungen 38, 40, die im gekoppelten Zustand über die Schutzeinrichtung 74 mit der am Kondensator 68 bereitgestellten Gleichspannung 28 beaufschlagt sind. Lediglich exemplarisch sind an der ersten Versorgungsebene 70 Schutzeinrichtungen 34 angeschlossen, die jeweilige Einrichtungsanschlüsse 30 bereitstellen. An diese Schutzeinrichtungen 34 sind ein Heizelement 20, ein Wechselrichter 22 sowie ein Wechselrichter 24 angeschlossen. An die Wechselrichter 22, 24 sind jeweilige, nicht weiter bezeichnete elektrische Maschinen angeschlossen. Die erste Versorgungsebene 70 kann jedoch auch weitere Schutzeinrichtungen 34 mit weiteren elektrischen Einrichtungen umfassen.

An die zweite Versorgungsebene 72, die dem Grunde nach vergleichbar zu der ersten Versorgungsebene 72 ausgebildet ist, sind vorliegend vier Schutzeinrichtungen 34 angeschlossen. An diese Schutzeinrichtungen sind zwei Wechselrichter 12, 14, eine Beleuchtungseinrichtung 16 sowie ein Heizelement 18 angeschlossen. Auch die zweite Versorgungsebene 72 kann weitere Schutzeinrichtungen 34 mit weiteren, daran angeschlossenen elektrischen Einrichtungen umfassen. An die Wechselrichter 12, 14 sind jeweilige nicht bezeichnete elektrische Maschinen angeschlossen.

Die Schutzeinrichtungen 34 sowie auch die Schutzeinrichtung 74 dienen zum Schützen der jeweiligen Einrichtungsanschlüsse 30 beziehungsweise des Energiequellenanschlusses 32 vor einem bestimmungsfremden Überstrom. Jede der Schutzeinrichtungen 34, 74 umfasst zu diesem Zweck eine Sensoreinheit 50, die dazu dient, einen elektrischen Strom am jeweiligen Einrichtungsanschluss 30 beziehungsweise Energiequellenanschluss 32 zu erfassen.

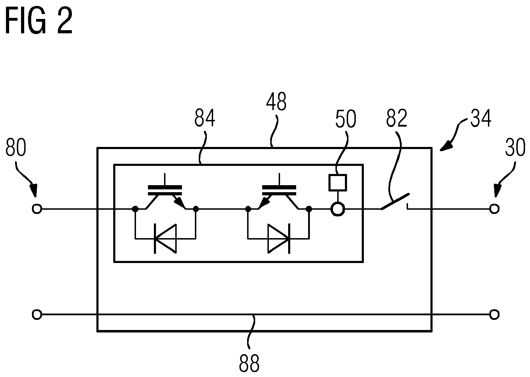

Darüber hinaus umfasst jede der Schutzeinrichtungen 34 eine Schalteinheit 48 (FIG 2), die ausgebildet ist, den jeweiligen Einrichtungsanschluss 30 beziehungsweise den Energiequellenanschluss 32 abhängig von einem Ermitteln des Überstroms zu deaktivieren. Zu diesem Zweck ist die Sensoreinheit 50 ausgebildet, den erfassten elektrischen Strom mit einem Vergleichswert zu vergleichen und bei Überschreiten des Vergleichswerts durch einen Betrag des Werts des elektrischen Stroms ein Steuersignal an die Schalteinheit 48 abzugeben, sodass diese den entsprechenden Einrichtungsanschluss 30 beziehungsweise Energiequellenanschluss 32 deaktiviert.

Mittels der elektrischen Leitungen 38, 40 werden die Schutzeinrichtungen 34 miteinander sowie auch mit dem Energiequellenanschluss 32 elektrisch gekoppelt. Die Kopplung zwischen der ersten Versorgungsebene 70 und der zweiten Versorgungsebene 72 erfolgt durch die Schutzeinrichtung 74.

An jedem der Wechselrichter 12, 14, 22, 24 ist ein jeweiliger Kondensator 76 vorgesehen, der über den jeweiligen Einrichtungsanschluss 30 mit den jeweiligen elektrischen Leitungen 38, 40 elektrisch gekoppelt ist.

Die Schutzeinrichtung 34 ist in einer schematischen Schaltbilddarstellung in FIG 2 dargestellt. Zu erkennen ist, dass die Schutzeinrichtung 34 den Einrichtungsanschluss 30 zum Anschließen der elektrischen jeweiligen Einrichtung bereitstellt. Gegenüberliegend ist ein Leitungsanschluss 80 vorgesehen, mittels dessen die Schutzeinrichtung 34 an die elektrischen Leitungen 38, 40 angeschlossen werden kann. Zwischen dem Leitungsanschluss 80 und dem Einrichtungsanschluss 30 ist die Schalteinheit 48 ausgebildet, mittels derer der Einrichtungsanschluss 30 deaktivierbar ist.

Die Schalteinheit 48 weist in nicht weiter spezifizierter Weise ein elektromechanisches Schaltelement 82 auf, welches mittels eines nicht weiter dargestellten Steuersignals betätigbar ist. Darüber hinaus ist in Reihe zum elektromechanischen Schaltelement 82 ein Halbleiterschaltelement 84 aus zwei antiseriell geschalteten Transistoren T₁, T₂ mit nicht bezeichneten Inversdioden in Reihe geschaltet. Das Halbleiterschaltelement 84 ist mittels eines weiteren Steuersignals hinsichtlich des Schaltzustands steuerbar. Vorliegend sind die Transistoren T₁, T₂ durch IGBT gebildet. In alternativen Ausgestaltungen kann als Transistor jedoch auch ein Feldeffekttransistor, insbesondere ein MOSFET oder dergleichen eingesetzt werden.

Ferner umfasst die Schutzeinrichtung 34 den Stromsensor 50, mittels dessen der elektrische Strom der angeschlossenen elektrischen Einrichtung erfasst werden kann. Der Stromsensor 50 weist ferner eine nicht dargestellte Auswerteschaltung auf, die den erfassten Wert des elektrischen Stroms, und zwar den Betrag des erfassten Werts des elektrischen Stroms mit dem Vergleichswert vergleicht. Ist der Betrag des Werts des erfassten Stroms größer als der Vergleichswert, wird mittels eines Steuersignals die Schalteinheit 48 in den ausgeschalteten Schaltzustand versetzt, sodass der Einrichtungsanschluss 30 deaktiviert ist.

In FIG 1 ist dargestellt, dass bei dem Wechselrichter 14 ein Kurzschluss 78 auftritt. Dies führt dazu, dass kurzzeitig ein sehr großer Strom aus dem Gleichspannungsenergieversorgungsnetz 10 angefordert wird, der zugleich auch die zugeordnete Schutzeinrichtung 34 durchströmt. Die Schalteinrichtung 34 ermittelt den Überstrom und schaltet die Schalteinheit 48 in den ausgeschalteten Schaltzustand, sodass der entsprechend zugeordnete Einrichtungsanschluss 30 deaktiviert ist.

Bis zur Wirksamkeit dieses Ausschaltens wird aufgrund des Kurzschlusses 78 der entsprechend erfasste Strom jedoch sehr groß. Dies kann - wie im Folgenden erläutert - Probleme hinsichtlich der Selektivität verursachen.

Im vorliegenden Fall ist der Wechselrichter 14 für eine größere elektrische Leistung ausgelegt als der Wechselrichter 12 und die Schutzeinrichtungen 34, die den jeweiligen Einrichtungsanschlüssen 30 zugeordnet sind, sind entsprechend auf die jeweiligen Leistungen der Wechselrichter 12, 14 angepasst eingestellt.

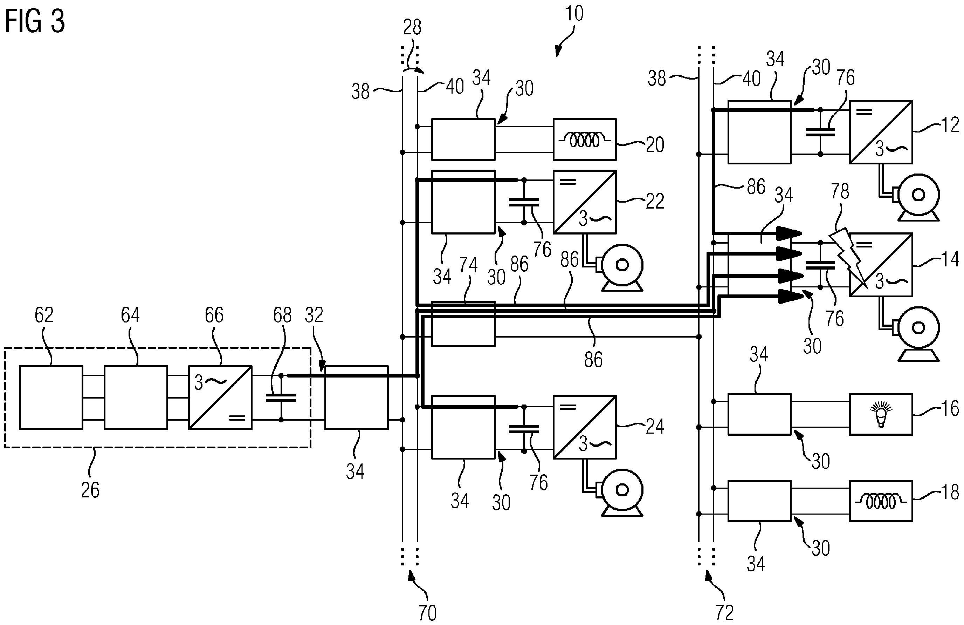

Aufgrund des Kurzschlusses 78 kann somit der Fall auftreten, dass aus den Kondensatoren 76 sowie dem Kondensator 68 kurzzeitig ein sehr großer Strom bezogen wird, der in den Kurzschluss 78 eingespeist wird. FIG 3 zeigt in einer schematischen Darstellung wie FIG 1 mit entsprechenden Strompfeilen 86 die Stromverläufe im Gleichspannungsenergieversorgungsnetz 10. Dies kann jetzt dazu führen, dass die Schutzeinrichtung 34, an der der Wechselrichter 12 angeschlossen ist, mit einem derart hohen Strom beaufschlagt wird, dass deren Schalteinheit 48 ebenfalls in den ausgeschalteten Schaltzustand geschaltet wird, wodurch dann auch der entsprechende Einrichtungsanschluss 30 deaktiviert wird, obwohl bei dieser elektrischen Einrichtung kein Fehler vorliegt. Das gleiche kann dem Grunde nach auch für die weiteren Schutzeinrichtungen 34 passieren, an denen die Wechselrichter 22, 24 angeschlossen sind, wobei auch bezüglich der Energiequelle 26. Hierbei handelt es sich um unerwünschte Wirkungen, die das Selektivitätsprinzip verletzten.

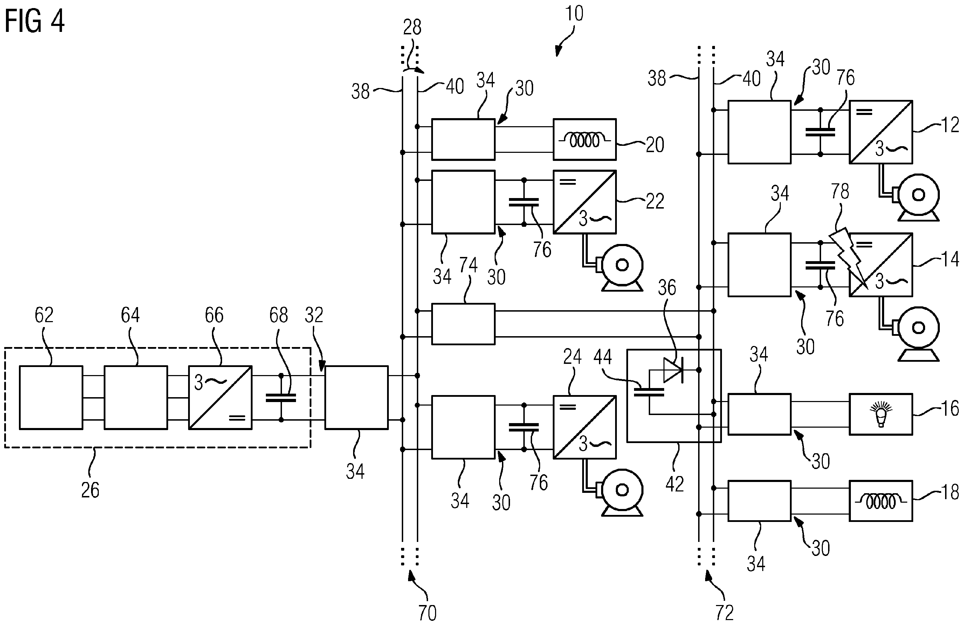

FIG 4 zeigt nun in einer schematischen Schaltbilddarstellung wie FIG 1 eine Möglichkeit, die vorgenannte Problematik zu reduzieren beziehungsweise sogar vollständig zu vermeiden. Es ist nämlich gemäß FIG 4 vorgesehen, dass an die elektrischen Leitungen 38, 40, hier bei der zweiten Versorgungsebene 72, eine Impulsschaltung 42 angeschlossen ist, die vorliegend eine Reihenschaltung aus einem Kondensator 44 sowie einer Diode 36 aufweist.

Die Reihenschaltung und die Polarität der Diode 36 sind derart gewählt, dass bei einem Spannungseinbruch der Versorgungsspannung 28 an den elektrischen Leitungen 38, 40 automatisch elektrische Ladung für einen vorgegebenen Zeitraum eingespeist wird, sodass ein zusätzlicher Stromfluss erzeugt wird, der für den Kurzschluss 78 zur Verfügung steht. Dadurch ist es möglich, die mit den Strompfeilen 86 in FIG 3 dargestellten Ströme aus dem Kondensator 76 sowie dem Kondensator 68 angeforderten Ströme zu reduzieren oder sogar nahezu zu vermeiden, sodass bei dieser Ausgestaltung lediglich die Schutzeinrichtung 34 des Wechselrichters 14 auslöst, bei der auch der Kurzschluss 78 aufgetreten ist. Die weiteren Schutzeinrichtungen 34 brauchen hier nicht betätigt zu werden beziehungsweise greifen nicht ein. Dadurch werden auch die angeschlossenen Einrichtungen hinsichtlich ihrer bestimmungsgemäßen Funktion nicht beeinträchtigt. Infolgedessen kann die Selektivität weiter gewährleistet werden.

Auch wenn in FIG 4 lediglich eine einzige Impulsschaltung 42 dargestellt ist, kann in alternativen Ausgestaltungen vorgesehen sein, dass zum Beispiel zumindest für jede Versorgungsebene 70, 72 wenigstens eine einzige Impulsschaltung 42 vorgesehen ist. Natürlich kann für die Versorgungsebenen 70, 72 auch vorgesehen sein, dass mehr als eine einzige Impulsschaltung 42 vorgesehen ist. Besonders vorteilhaft kann vorgesehen sein, wenn für jede der Schutzeinrichtungen 34 eine, vorzugsweise unmittelbar, an der jeweiligen der Schutzeinrichtungen 34 angeschlossene Impulsschaltung 42 vorgesehen ist. Dadurch kann eine besonders gute Funktionalität in Bezug auf die Selektivität erreicht werden.

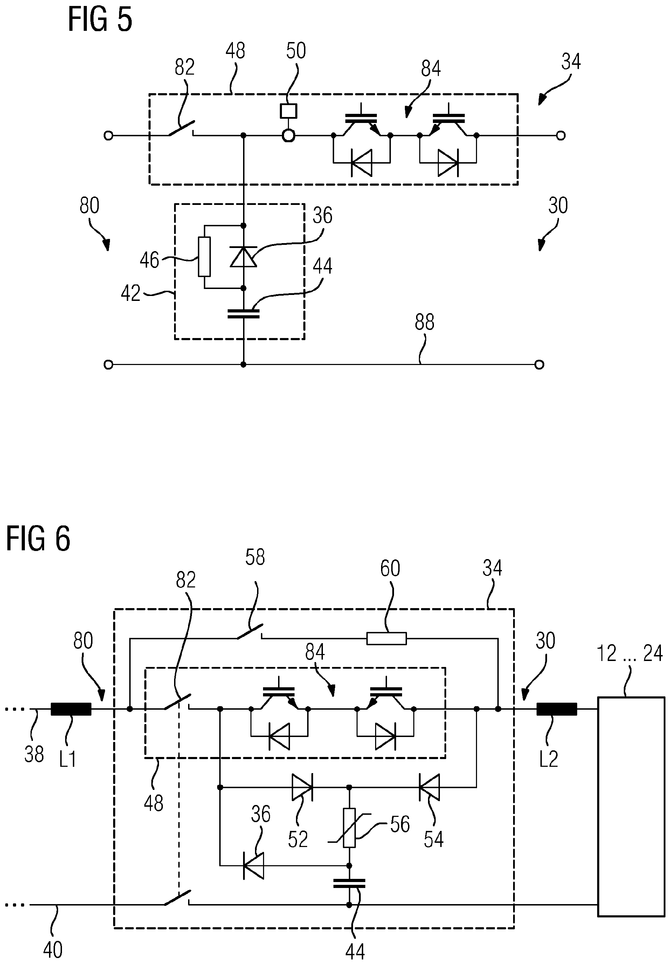

Eine Weiterbildung ergibt sich anhand von FIG 5, die eine schematische Schaltbilddarstellung einer Schutzeinrichtung 34 zeigt. Die Schutzeinrichtung 34 basiert dem Grunde nach auf der Schutzeinrichtung 34, wie sie bereits anhand von FIG 2 erläutert wurde, weshalb ergänzend auf die diesbezüglichen Ausführungen verwiesen wird. Ergänzend zu der Schutzeinrichtung 34 gemäß FIG 2 umfasst die Schutzeinrichtung 34 gemäß FIG 5 eine integrierte Impulsschaltung 42. Die Reihenschaltung aus dem Kondensator 44 und der Diode 36 ist vorliegend zwischen dem elektromechanischen Schaltelement 82 und dem Halbleiterschaltelement 84 einerseits angeschlossen und andrerseits an einen durchgeführten Bezugspotentialanschluss 88.

Die Funktion der Impulsschaltung 42 entspricht der, wie sie bereits anhand von FIG 4 erläutert wurde, weshalb auch diesbezüglich ergänzend auf die entsprechenden Ausführungen verwiesen wird. In alternativen Ausgestaltungen braucht der Bezugspotentialanschluss 88 nicht durch die Schutzeinrichtung 34 durchgeführt zu sein. Er kann auch unter Umgehung der Schutzeinrichtung 34 unmittelbar am Einrichtungsanschluss 30 angeschlossen sein.
Darüber hinaus umfasst die Impulsschaltung 42 gemäß FIG 5 einen elektrischen Widerstand 46, der zu der Diode 36 parallelgeschaltet ist. Durch den elektrischen Widerstand 46 kann der Kondensator 44 aufgeladen werden, sodass er die gewünschte Ladungsmenge bereitzustellen vermag.

Eine Kapazität des Kondensators 44 wird vorliegend unter anderem abhängig davon ermittelt, welche Ladungsmenge für welchen Zeitraum zur Verfügung gestellt werden soll, damit die entsprechende Schutzeinrichtung 34 zuverlässig auslösen kann, ohne dass weitere benachbarte Schutzeinrichtungen 34 betroffen werden. Zu diesem Zweck können Auslösecharakteristiken der Schutzeinrichtungen 34 ergänzend berücksichtigt werden. Auch Leitungsinduktivitäten L₁, L₂ des Gleichspannungsenergieversorgungsnetzes 10 können hierbei Berücksichtigung finden.

Der Vorteil dieser Ausgestaltung liegt unter anderem darin, dass das Gleichspannungsenergieversorgungsnetz 10 beliebig ausgestaltet und erweitert werden kann, wobei durch die vorgesehenen Schutzeinrichtungen 34 zugleich auch die gewünschte Funktion hinsichtlich der Selektivität realisiert werden kann, ohne dass separat ergänzende Bauelemente wie die separate Impulsschaltung 42 an den elektrischen Leitungen 38, 40 angeschlossen zu werden brauchen. Gleichwohl kann natürlich vorgesehen sein, dass ergänzend noch zusätzliche Impulsschaltungen 42 vorgesehen werden.

FIG 6 zeigt eine Weiterbildung der Schutzeinrichtung 34 gemäß FIG 5, die zugleich ermöglicht, einen Überspannungsschutz zu realisieren. Zu diesem Zweck sind antiseriell geschaltete Dioden 52, 54 parallel zum Halbleiterschaltelement 84 angeschlossen, deren Mittelanschluss über einen Varistor 56 an den Kondensator 44 angeschlossen ist. Über den Varistor 56 kann der Kondensator 44 zugleich auch auf seine vorgegebene Spannung aufgeladen werden, sodass er die gewünschte Ladungsmenge bereitzustellen vermag. Darüber hinaus ermöglicht es diese Ausgestaltung, Spannungsimpulse, die einen vorgegebenen Wert hinsichtlich ihrer Amplitude übersteigen, abzufangen und deren Energie teilweise im Kondensator 44 zu speichern und/oder teilweise mittels des Varistors 56 in Wärme umzuwandeln.

Darüber hinaus umfasst die Schutzeinrichtung 34 gemäß FIG 6 eine Reihenschaltung aus einem weiteren elektromechanischen Schaltelement 58 sowie einem weiteren elektrischen Widerstand 60, mittels derer eine elektrische Verbindung zwischen dem Leitungsanschluss 80 sowie dem Einrichtungsanschluss 30 hergestellt werden kann. Hierdurch kann ein Vorladen eines etwaigen Kondensators 76 erreicht werden, sodass bei Einschalten der Schalteinheit 48 ein großer Stromimpuls vermieden beziehungsweise reduziert werden kann.

Der Kondensator 44 sollte vorzugsweise eine geringe Eigeninduktivität aufweisen, beispielsweise als Folienkondensator oder dergleichen ausgebildet sein. Die Diode 36 sollte dazu ausgebildet sein, einen großen Stromimpuls führen zu können, also infolgedessen ein großes Grenzlastintegral aufweisen.

Bei einer Integration der Impulsschaltung 42 in die Schutzeinrichtung 34 ist es möglich, auch Fehler in der Impulsschaltung 42 zu erkennen, beispielsweise eine defekte Diode 36 oder einen defekten Kondensator 44, zum Beispiel indem eine Kondensatorspannung des Kondensators 44 erfasst wird.

Durch die Erfindung kann erreicht werden, dass der Überstrom, der durch den Kurzschluss 78 verursacht ist, aus einer separaten Quelle, nämlich dem Kondensator 44, gespeist werden kann, die nicht über einen Schutzschalter oder dergleichen abgesichert zu werden braucht. Für den Fall, dass der Kondensator 44 eine Störung aufweist, beispielsweise einen Kurzschluss oder dergleichen, kann dies durch die Diode 36 aufgefangen werden, die in diesem Fall eine Sperrwirkung bereitstellt. Dadurch ist ein defekter Kondensator 44 vom Gleichspannungsenergieversorgungsnetz 10 abgeklemmt und kann keine negativen Auswirkungen auf dieses ausüben. Um auch den Fall einer defekten Diode aufzufangen, könnten zwei Dioden in Reihe geschaltet werden.

Die Erfindung eignet sich besonders dann, wenn Halbleiterschalteinrichtungen genutzt werden. Es kann erreicht werden, dass ein vorgebbarer Zeitraum deutlich kleiner als 1 ms ist. Vorzugsweise kann der Zeitraum zum Beispiel etwa 100 µs oder sogar weniger betragen.

Darüber hinaus eignet sich die Erfindung natürlich auch besonders dann, wenn das Gleichspannungsenergieversorgungsnetz 10 räumlich weit ausgedehnt ist. So kann vorgesehen sein, dass mehrere Impulsschaltungen 42 in einem vorgegebenen Abstand an die elektrischen Leitungen 38, 40 angeschlossen werden, beispielsweise in einem Abstand von weniger als etwa 100 m, vorzugsweise in einem Abstand von etwa 50 m oder auch weniger. Ist eine Leitungsinduktivität der Leitungen 38, 40 klein, sollte eine Entfernung zwischen der Schutzeinrichtung 34 und der Impulsschaltung 42 möglichst gering sein, beispielsweise weniger als etwa 10 m oder dergleichen. Die Leitungsinduktivitäten sind in FIG 6 mit L₁ und L₂ bezeichnet.

Die Ausführungsbeispiele dienen ausschließlich der Erläuterung der Erfindung und sollen diese nicht beschränken.

Die Erfindung ist ferner nicht auf die Anwendung bei Energieversorgungsnetzen beschränkt, die Gleichspannung nutzen. Sie kann natürlich ebenso bei Energieversorgungsnetzen zum Einsatz kommen, die eine Wechselspannung als Versorgungsspannung nutzen. Die Wechselspannung kann eine einphasige oder auch eine mehrphasige, insbesondere dreiphasige, Wechselspannung sein.

## Patentansprüche

1. Energieversorgungsnetz (10) zum elektrischen Koppeln von wenigstens zwei am Energieversorgungsnetz (10) angeschlossenen elektrischen Einrichtungen (12 bis 24) mit wenigstens einer am Energieversorgungsnetz (10) angeschlossenen elektrischen Energiequelle (26) unter Nutzung einer vorgebbaren elektrischen Versorgungsspannung (28), mit
- einem Energiequellenanschluss (32) zum Anschließen der wenigstens einen elektrischen Energiequelle (26),
- elektrischen Einrichtungsanschlüssen (30) zum Anschließen einer jeweiligen der wenigstens zwei elektrischen Einrichtungen (12 bis 24),
- mit den Einrichtungsanschlüssen (30) elektrisch verbundene jeweilige Schutzeinrichtungen (34) zum Schützen des jeweiligen der Einrichtungsanschlüsse (30) vor einem bestimmungsfremden Überstrom, wobei jede Schutzeinrichtung (34) eine Sensoreinheit (50) zumindest zum Erfassen eines elektrischen Stroms am jeweiligen Einrichtungsanschluss (30) und eine Schalteinheit (48) aufweist, wobei die Schalteinheit (48) ausgebildet ist, den jeweiligen Einrichtungsanschluss (30) abhängig von einem Ermitteln des Überstroms zu deaktivieren, und
- wenigstens zwei mit der Versorgungsspannung (28) beaufschlagten elektrischen Leitungen (38, 40), von denen wenigstens eine Leitung (40) den wenigstens einen Energiequellenanschluss (32) mit den Schutzeinrichtungen (34) elektrisch koppelt,
**dadurch gekennzeichnet, dass**
die wenigstens zwei elektrischen Leitungen (38, 40) mit einer Impulsschaltung (42) zum Abgeben einer vorgebbaren elektrischen Ladungsmenge mit wenigstens einem Kondensator (44) elektrisch gekoppelt ist, die ausgebildet ist, bei einem Auftreten eines Spannungseinbruchs der Versorgungspannung (28) die elektrische Ladungsmenge abzugeben, wobei die Ladungsmenge zumindest abhängig vom Überstrom und einem vorgebbaren Zeitraum zum Abgeben der Ladungsmenge bestimmt ist.

2. Energieversorgungsnetz nach Anspruch 1, **dadurch gekennzeichnet, dass** der Zeitraum abhängig von wenigstens einer charakteristischen Eigenschaft wenigstens einer der Schutzeinrichtungen (34) bestimmt ist.

3. Energieversorgungsnetz nach einem der vorhergehenden Ansprüche, **dadurch gekennzeichnet, dass** bei Schutzeinrichtungen (34), die für unterschiedlich große bestimmungsfremde Überströme ausgebildet sind, die Ladungsmenge zumindest abhängig vom größten der Überströme bestimmt ist.

4. Energieversorgungsnetz nach einem der vorhergehenden Ansprüche, **dadurch gekennzeichnet, dass** zum wenigstens einen Kondensator (44) ein Schaltelement in Reihe geschaltet ist.

5. Energieversorgungsnetz nach Anspruch 4, **dadurch gekennzeichnet, dass** das Schaltelement eine Diode (36) umfasst.

6. Energieversorgungsnetz nach Anspruch 4 oder 5, **dadurch gekennzeichnet, dass** das Schaltelement mittels eines Steuersignals steuerbar ausgebildet ist.

7. Energieversorgungsnetz nach einem der Ansprüche 4 bis 6, **gekennzeichnet durch** eine mit den Sensoreinheiten (50) signaltechnisch gekoppelte Steuereinheit zum Bereitstellen eines Steuersignals für das Schaltelement.

8. Energieversorgungsnetz nach einem der vorhergehenden Ansprüche, **dadurch gekennzeichnet, dass** die Impulsschaltung (42) eine Ladeeinheit (46) zum Aufladen des Kondensators (44) mit der vorgebbaren Ladungsmenge aufweist.

9. Energieversorgungsnetz nach einem der vorhergehenden Ansprüche, **dadurch gekennzeichnet, dass** das Energieversorgungsnetz (10) als ein Gleichspannungsenergieversorgungsnetz ausgebildet ist.

10. Energieversorgungsnetz nach einem der vorhergehenden Ansprüche, **dadurch gekennzeichnet, dass** die Impulsschaltung (42) zumindest teilweise einstückig mit wenigstens einer der Schutzeinrichtungen (34) ausgebildet ist.

11. Verfahren zum elektrischen Koppeln von wenigstens zwei an einem Energieversorgungsnetz (10) angeschlossenen elektrischen Einrichtungen (12 bis 24) mit wenigstens einer am Energieversorgungsnetz (10) angeschlossenen elektrischen Energiequelle (26) unter Nutzung einer vorgegebenen elektrischen Versorgungsspannung (28), wobei
- die wenigstens eine elektrische Energiequelle (26) an einem Energiequellenanschluss (32) des Energieversorgungsnetzes (10) angeschlossen wird,
- die wenigstens zwei elektrischen Einrichtungen (12 bis 24) an jeweiligen elektrischen Einrichtungsanschlüssen (30) des Energieversorgungsnetzes (10) angeschlossen werden,
- die Einrichtungsanschlüsse (30) mittels jeweiliger mit den Einrichtungsanschlüssen (30) elektrisch verbundener Schutzeinrichtungen (34) vor einem bestimmungsfremden Überstrom geschützt werden, indem eine Sensoreinheit (50) einer jeweiligen der Schutzeinrichtungen (34) zumindest einen jeweiligen elektrischen Strom erfasst und mittels einer jeweiligen Schalteinheit (48) den jeweiligen Einrichtungsanschluss (30) abhängig von einem Ermitteln des Überstroms deaktiviert, und
- der wenigstens eine Energiequellenanschlusses (32) mit den Schutzeinrichtungen (34) mittels wenigstens einer von wenigstens zwei mit der Versorgungsspannung (28) beaufschlagten elektrischen Leitungen (38, 40) elektrisch gekoppelt wird,
**dadurch gekennzeichnet, dass**
an den wenigstens zwei elektrischen Leitungen (38, 40) eine Impulsschaltung (42) zum Abgeben einer vorgegebenen elektrischen Ladungsmenge mit wenigstens einem Kondensator (44) angeschlossen ist, wobei mittels der Impulsschaltung (42) bei einem Auftreten eines Spannungseinbruchs der Versorgungspannung (28) die elektrische Ladungsmenge abgegeben wird, wobei die Ladungsmenge zumindest abhängig vom Überstrom und einem vorgegebenen Zeitraum zum Abgeben der Ladungsmenge bestimmt ist.
